# EUROPEAN PATENT SPECIFICATION

(11) **EP 4 487 811 B1**
(45) Date of publication and mention of the grant of the patent: **26.08.2026**
(21) Application number: 24186483.4
(22) Date of filing: 04.07.2024
(51) Int. Cl.: A61C 7/02

(54) **EXTRACTOR**
EXTRAKTOR
EXTRACTEUR

(30) Priority: 06.07.2023 CN 202321767680 U
(43) Date of publication of application: 08.01.2025
(73) Proprietor: Pacific Care Limited, Hong Kong (HK)
(72) Inventor: Yao Yuet, Ping, Hong Kong (HK); Tsai Chun, Hiu, Hong Kong (HK)
(74) Representative: Isern Patentes y Marcas S.L.

(56) References cited:
- CN-U- 204 863 518
- CN-U- 209 107 623
- CN-U- 214 761 538

## Description

### Technical Field

The embodiment of the present disclosure relates to the technical field of orthodontic, in particular to an extractor.

### Background

Brace is a tool for correcting teeth uniformity, which plays a vital role in orthodontic correction. There are many kinds of braces, among which the thermoplastic brace is favored by people due to simple operation and practical price. The thermoplastic brace is divided into an upper brace and a lower brace. The upper brace is meshed with upper teeth, and the lower brace is meshed with lower teeth, so that the correction effect is achieved.

However, in the process of implementing the embodiment of the present disclosure, the inventors have found that: during the process of correcting teeth, several thermoplastic braces are required for adjustable replacement, and the durability of the thermoplastic braces often depends on whether the user can correctly remove them. Most of the time, in the absence of tools, the braces are easily deformed when picked down by using fingernails or sharp tools, which even cause to break in severe cases. CN 209 107 623 U, CN 214 761 538 U and CN 204 863 518 U disclose an extractor, comprising: a grip hook; a dismounting hook, which comprises a hook-shaped member and an elongated member, one end of the elongated member is connected to the grip hook, the other end of the elongated member is connected to the hook-shaped member, the hook-shaped member is used for hooking a brace, so as to separate the brace from teeth.

### Summary

The invention is defined by an extractor with the features of claim 1. Preferred embodiments of the invention are defined in the dependent claims.

The embodiment of the present disclosure provides an extractor, which hooks the brace, and fingers apply acting force downwards or upwards to enable the brace to be gradually separated from teeth, so that the brace is picked down, and the risk of deformation or breakage during removal of the brace is reduced.

In order to solve the above technical problem, one technical solution adopted by the present disclosure is to provide an extractor, comprising a grip hook and a dismounting hook. The dismounting hook comprises a hook-shaped member and an elongated member. One end of the elongated member is connected to the grip hook, and the other end of the elongated member is connected to the hook-shaped member. The hook-shaped member is used for hooking a brace so as to separate the brace from teeth.

Optionally, the hook-shaped member comprises a pointed portion and a spherical portion. The spherical portion is connected to the pointed portion and the elongated member respectively. The pointed portion and the grip hook are located on two sides of the elongated member, and the pointed portion is inclined towards the grip hook.

According to the invention, the elongated member comprises a connecting section and a clamping section. One end of the connecting section is connected to the hook-shaped member, and the other end of the connecting section is connected to the clamping section. The grip hook is arranged with an abutting cavity, a connecting cavity and a clamping groove. The connecting cavity is located between the abutting cavity and the clamping groove, and the clamping section passes through the abutting cavity and the connecting cavity and then is inserted into the clamping groove.

Optionally, the outer surface of the elongated member is arranged with an anti-skid pattern.

Optionally, a step surface is arranged between the connecting cavity and the clamping groove. The outer surface of the clamping section is arranged with a first limiting portion for abutting against the step surface.

Optionally, the grip hook is further arranged with an avoidance groove, which is communicated with the connecting cavity.

Optionally, a wall surface of the abutting cavity is arranged with a second limiting portion, which is located at an edge of the avoidance groove. The outer surface of the clamping section is arranged with an abutting portion, which is used for abutting against the second limiting portion without allowing the dismounting hook to rotate.

Optionally, the grip hook is arranged with a plurality of deformation portions, which are arranged at intervals along a wall surface of the abutting cavity. At least one third limiting portion protrudes from the outer wall surface of the clamping section. An accommodating groove for accommodating the limiting portion is enclosed between any two adjacent deformation portions and the abutting cavity, and the accommodating groove is communicated with the abutting cavity. A deformation space is enclosed between the outer wall surface of the clamping section and the limiting portion, and the deformation space is used for deformation of the deformation portion.

Optionally, the extractor further comprises a chew gum layer, which is wound around the grip hook., and part of the chew gum layer is arranged on two opposite side surfaces of the grip hook. The chew gum layer is used for correcting the brace.

Optionally, an end of the grip hook away from the dismounting hook is arranged with a misbite portion, which is used for correcting the misbite of upper and lower teeth.

The beneficial effects of the embodiment of the present application are as follows: the fingers hold the grip hook, and the hook-shaped member extends between the teeth, so that the hook-shaped member hooks the brace; the fingers apply acting force downwards or upwards, so that the brace is gradually separated from the teeth, thereby the risk of deformation or breakage during removal of the brace is reduced.

### Description of Drawings

In order to more clearly describe the technical solutions of the embodiment of the present application, the following briefly describes the drawings required to be used in the embodiment of the present application, and obviously, the drawings described below are merely some embodiments of the present application. For ordinary technicians in this field, other drawings may be further obtained based on the drawings without any creative work.
FIG. 1 is a view of an extractor provided by the embodiment of the present disclosure;
FIG. 2 is an exploded view of an extractor provided by the embodiment of the present disclosure;
FIG. 3 is an enlarged view of part A of FIG. 2 provided by the embodiment of the present disclosure;
FIG. 4 is a view of a grip hook provided by the embodiment of the present disclosure;
FIG. 5 is an enlarged view of part B of FIG. 4 provided by the embodiment of the present disclosure;
FIG. 6 is a view of an extractor of another embodiment of the present disclosure;
FIG. 7 is a cutaway view of an extractor of another embodiment of the present disclosure;
FIG. 8 is a cutaway view of a chew gum layer of an extractor of another embodiment of the present disclosure;
FIG. 9 is a cutaway view of integrally formed grip hook and dismounting hook of an extractor of another embodiment of the present disclosure.

Reference Number:
1. Extractor; 10. Grip Hook; 20. Dismounting Hook; 30. Chew Gum Layer; 101. Abutting Cavity; 102. Connecting Cavity; 103. Clamping Groove; 104. Deformation Portion; 105. Gum Groove; 106. Misbite Portion; 107. Accommodating Groove; 108. Step Surface; 109. Avoidance Groove; 110. Second Limiting Portion; 111. Abutting Surface; 201. Hook-shaped Member; 202 Elongated Member; 301. Protruding Portion; 302. Connecting Groove; 2011. Pointed Portion; 2012. Spherical Portion; 2021. Connecting Section; 2022. Clamping Section; 202a. Boss; 202b. Anti-Skid Pattern; 202c. Deformation Space; 202d. First Limiting Portion; 202e. Abutting Portion; 202f. Third Limiting Portion; 3021. Limiting Section; 3022. Connecting Section; 302a. Limiting Wall Surface.

### Detailed Description of Embodiments

To facilitate understanding of the present disclosure, the present disclosure will be described in more detail below with reference to the drawings and detailed embodiments. It should be noted that, when an element is referred to as being "fixed to" another element, it may be directly on another element or there may be one or more centered elements therebetween. When an element is referred to as being "connected to" another element, it may be directly connected to another element or there may be one or more centered elements therebetween. As used herein, the terms "vertical," "horizontal," "left," "right," and similar expressions are for illustrative purposes only.

Unless otherwise defined, all technical and scientific terms used in this description have the same meanings as commonly understood by those skilled in the art belonging to the present disclosure. Terms used in the description of the present disclosure are merely for the purpose of describing detailed embodiments, and are not intended to limit the present disclosure. As used herein, the term "and / or" includes any and all combinations of one or more related listed items.

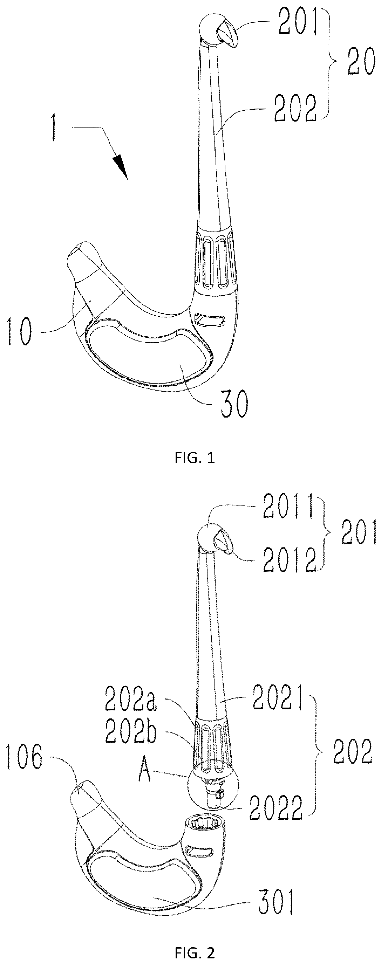

Referring to FIG. 1, an extractor 1 comprises a grip hook 10 and a dismounting hook 20. The grip hook 10 is connected with the dismounting hook 20. The shape of the grip hook 10 is U-shaped, when in use, fingers are bent towards the inner side of the U shape, so that the fingers hold the grip hook 10, and the pulling force is conveniently applied. The shape of the dismounting hook 20 is hook-shaped, when in use, the dismounting hook 20 with hook shape extends between the upper edge of the brace and the gum by adjusting to a proper direction, so that the dismounting hook 20 hooks with the brace, then the pulling force is applied to the outside of the oral cavity, and the brace is hooked and held at a plurality of positions between the upper edge of the brace and the gum, so that the brace is separated from the teeth. The time for removing the brace by using the extractor 1 is much shorter than the time for removing the brace by using a fingernail, and the risk of deformation or breakage during removal of the brace is reduced.

For the aforesaid grip hook 10, referring to FIG. 1, the lower bottom surface of the grip hook 10 is a plane, which is used to facilitate the extractor 1 to be placed in a vertical direction, and the extractor 1 is not easy to fall over.

For the aforesaid dismounting hook 20, referring to FIG. 1 and FIG. 2, the dismounting hook 20 comprises a hook-shaped member 201 and an elongated member 202. One end of the elongated member 202 is connected to the grip hook 10, and the other end of the elongated member 202 is connected to the hook-shaped member 201. The hook-shaped member 201 is used to hook the brace, so that the brace is separated from the teeth.

For the aforesaid hook-shaped member 201, referring to FIG. 2, the shape of the hook-shaped member 201 is hook-shaped, and the hook-shaped member 201 comprises a pointed portion 2011 and a spherical portion 2012. The shape of the pointed portion 2011 is a thin pointed shape, and the spherical portion 2012 is connected to the pointed portion 2011 and the elongated member 202 respectively. The pointed portion 2011 and the grip hook 10 are located on two sides of the elongated member 202, and the pointed portion 2011 is inclined towards the grip hook 10. The pointed portion 2011 extends at an included angle with the elongated member 202, and the outer diameter of the pointed portion 2011 gradually decreases along a direction away from the spherical portion 2012. When the extractor 1 is used to remove the brace, the extractor 1 extends into the gaps relative to the middle of the brace and between the teeth, one end of the pointed portion 2011 facing the grip hook 10 is hooked and held on the brace, and fingers hold the grip portion to apply an acting force to the outside of the oral cavity, so as to separate the brace from the teeth.

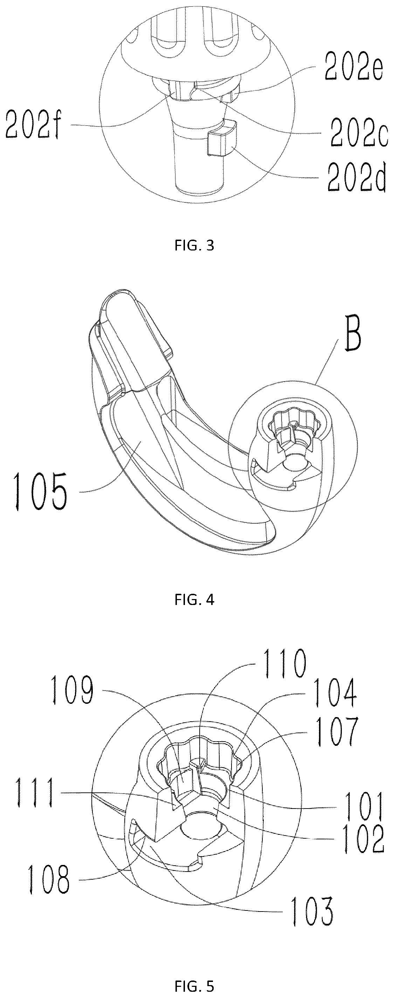

For the aforesaid elongated member 202, referring to FIG. 2, the elongated member 202 comprises a connecting section 2021 and a clamping section 2022. One end of the connecting section is connected to the hook-shaped member, and the other end of the connecting section is connected to the clamping section. The grip hook is arranged with an abutting cavity 101, a connecting cavity 102 and a clamping groove 103, as shown in FIG. 4 in combination with FIG. 5, the connecting cavity 102 is located between the abutting cavity 101 and the clamping groove 103, the clamping section 2022 passes through the abutting cavity 101 and the connecting cavity 102 and then is inserted into the clamping groove 103, realizing that the dismounting hook 20 is rotatably connected to the grip hook 10, and the dismounting hook 20 is able to rotate relative to the grip hook 10, when in use, the dismounting hook 20 may be rotated to a proper angle relative to the grip hook 10, thereby increasing the flexibility of the extractor 1.

The cross-sectional area along the depth direction of the clamping groove 103 is greater than the cross-sectional area along the depth direction of the connecting cavity 102, so that a step surface 108 is arranged between the clamping groove 103 and the connecting cavity 102. The cross-sectional area along the depth direction of the abutting cavity 101 is greater than the cross-sectional area along the depth direction of the connecting cavity 102, so that an abutting surface 111 is arranged between the abutting cavity 101 and the connecting cavity 102, as shown in FIG. 5. The outer surface of the clamping section 2022 is arranged with a first limiting portion 202d, as shown in FIG. 2 in combination with FIG. 3, the first limiting portion 202d is used to abut against the step surface 108, so as to limit the dismounting hook 20 to move in the vertical direction.

A wall surface of the connecting cavity 102 is arranged with an avoidance groove 109, as shown in FIG. 5, the avoidance groove 109 is communicated with the connecting cavity 102, and two ends of the avoidance groove 109 respectively pass through the step surface 108 and the abutting surface 111, so that two ends of the avoidance groove 109 are respectively communicated with the abutting cavity 101 and the clamping groove 103. When the clamping section 2022 passes through the abutting cavity 101 and the connecting cavity 102 and is inserted into the clamping groove 103, the first limiting portion 202d passes through the notch of the avoiding groove 109 located on the step surface 108 from the notch of the avoiding groove 109 located on the abutting surface 111.

A wall surface of the abutting cavity 101 is arranged with a second limiting portion 110, as shown in FIG. 5, the second limiting portion 110 is located at an edge of the avoidance groove 109. The outer surface of the clamping section 2022 is arranged with an abutting portion 202e, and the abutting portion 202e is used to abut against the second limiting portion 110 without allowing the dismounting hook 20 to rotate.

For the aforesaid grip hook 10, referring to FIG. 2, the grip hook 10 is further arranged with a misbite portion 106, which is flat-shaped and located at an end of the grip hook 10 away from the dismounting hook 20. When in use, one end of the dismounting hook 20 is outside the oral cavity, and the two opposite sides of the misbite portion 106 extend between the upper and lower incisors, and then continuous occlusion of the upper and lower teeth is performed, so that the condition of malocclusion may be relieved.

For the aforesaid connecting section 2021, referring to FIG. 2, the outer surface of the connecting section 2021 is further arranged with a plurality of bosses 202a, which are arranged on the outer surface of the elongated member 202 at intervals. The plurality of bosses 202a together form an anti-skid pattern 202b, and the anti-skid pattern 202b is located at an end away from the hook-shaped member 201. In other embodiments, the shapes of the bosses 202a are strip-shaped, square-shaped, circle-shaped, etc., arranged on the outer surface of the elongated member 202 at intervals. The arrangement may be along the axial direction of the elongated member 202, inclined to the outer surface of the elongated member 202, in a spiral shape, etc.

At least one third limiting portion 202f protrudes from the outer wall surface of the clamping section 2022, as shown in FIG. 3, in the embodiment of the present application, the number of the third limiting portion 202f is two as an example. The two third limiting portions 202f are oppositely arranged on the outer wall surface of the connecting section 2021, and the shape of the third limiting portion 202f is oblate-shaped. The wall surface of the abutting cavity 101 is arranged with the deformation portion 104, as shown in FIG. 5, the number of the deformation portion 104 is several, which are arranged on the wall surface of the abutting cavity 101 at intervals. The accommodating groove 107 for accommodating the third limiting portion 202f is enclosed between any two adjacent deformation portions 104 and the abutting cavity 101, and the accommodating groove 107 is communicated with the abutting cavity 101. In addition, a deformation space 202c is enclosed between the outer wall surface of the clamping section 2022 and the third limiting portion 202f, as shown in FIG. 3. When the angle of the dismounting hook 20 is required to be adjusted, that is, the dismounting hook 20 rotates relative to the grip hook 10, under the action of applying an external force, the third limiting portion 202f pushes one deformation portion 104 (adjacent to the third limiting portion 202f) to deform towards one deformation space 202c (adjacent to the third limiting portion 202f), and the deformation portion 104 generates an elastic force, and under the condition of stopping applying the external force, the deformation portion 104 is able to reset under the action of the elastic force, when the third limiting portion 202f rotates from one accommodating groove 107 to another accommodating groove 107, the dismounting hook 20 rotates relative to the grip hook 10, realizing that the user may rotate the dismounting hook 20 at multiple angles.

For the aforesaid extractor 1, referring to FIG. 1 in combination with FIG. 4, the extractor 1 further comprises a chew gum layer 30, and the material of the chew gum layer 30 is flexible materials, such as soft rubber. The gum groove 105 is arranged along the lower bottom surface extending towards the upper end of the grip hook 10, and the gum groove 105 is sequentially wound around one end of the lower bottom surface of the grip hook 10, the top of the grip hook 10 and the other end of the lower bottom surface of the grip hook 10; the gum groove 105 is arranged with a weight reduction groove in a direction facing the lower bottom surface of the grip hook 10. The weight reduction groove is communicated with the gum groove 105, and when the weight reduction groove is used in producing the extractor 1, the material is reduced, and the weight of the extractor 1itself may be decreased. The chew gum layer 30 is fastened to the gum groove 105, and the chew gum layer 30 is sequentially wound around the grip hook 10 from one side extending from the lower bottom surface of the grip hook 10, one side facing away from the lower bottom surface of the grip hook 10 and the other side extending from the lower bottom surface of the grip hook 10, that is to say, part of the chew gum layer 30 is located on two opposite side surfaces of the grip hook 10. The contour of the bottom surface of the chew gum layer 30 is completely consistent with the contour of the gum groove 105, so that the chew gum layer 30 is completely attached to the gum groove 105, and the edge of the upper surface of the chew gum layer 30 is flush with the outer surface of the grip hook 10. A protruding portion 301 protrudes outward from the center of the upper surface of the chew gum layer 30 on the opposite sides of the grip portion. When the brace is corrected, the two protruding portions 301 abut against the upper and the lower teeth respectively, and the upper teeth are engaged with the lower teeth for multiple times, so that the brace is able to be attached close to the inner surface of the brace, thereby achieving the effect of correcting the brace.

The working principle of the extractor 1 is described in detail below: during mounting, the chew gum layer 30 is completely attached to the gum groove 105 of the grip hook 10, the dismounting hook 20 passes through the abutting cavity 101, the connecting cavity 102 and is inserted into the clamping groove 103, and the first limiting portion 202d passes through the notch of the avoidance groove 109 located on the step surface 108 from the notch of the avoidance groove 109 located on the abutting surface 111. Then, the dismounting hook 20 rotates relative to the grip hook 10, so that the first limiting portion 202d of the clamping section 2022 abuts against the step surface 108, and the abutting portion 202e is stacked on the second limiting portion 110, when the dismounting hook 20 continues to rotate relative to the grip hook 10, so that the abutting portion 202e is separated from the second limiting portion 110, at this time, the dismounting hook 20 continues to rotate in the opposite direction, and the abutting portion 202e abuts against one end or the other end of the second limiting portion 110, without allowing the first limiting portion 202d enters the avoidance groove 109 again, and the risk that the dismounting hook 20 is separated from the grip hook 10 is reduced. When the user needs to adjust the angle of the dismounting hook 20, that is, the dismounting hook 20 rotates relative to the grip hook 10, under the action of applying an external force, the third limiting portion 202f pushes one deformation portion 104 (adjacent to the third limiting portion 202f) to deform towards one deformation space 202c (adjacent to the third limiting portion 202f), and the deformation portion 104 generates an elastic force, and under the condition of stopping applying the external force, the deformation portion 104 is able to reset under the action of the elastic force, when the third limiting portion 202f rotates from one accommodating groove 107 to another accommodating groove 107, the dismounting hook 20 rotates relative to the grip hook 10, realizing that the user may rotate the dismounting hook 20 at multiple angles. When in use, the dismounting hook 20 rotates to a proper angle relative to the grip hook 10, the dismounting hook 20 extends into the oral cavity between the edge of the brace and the gum to apply a pulling force, and the brace is removed at multiple positions between the edge and the gum, so that the brace is separated from the teeth.

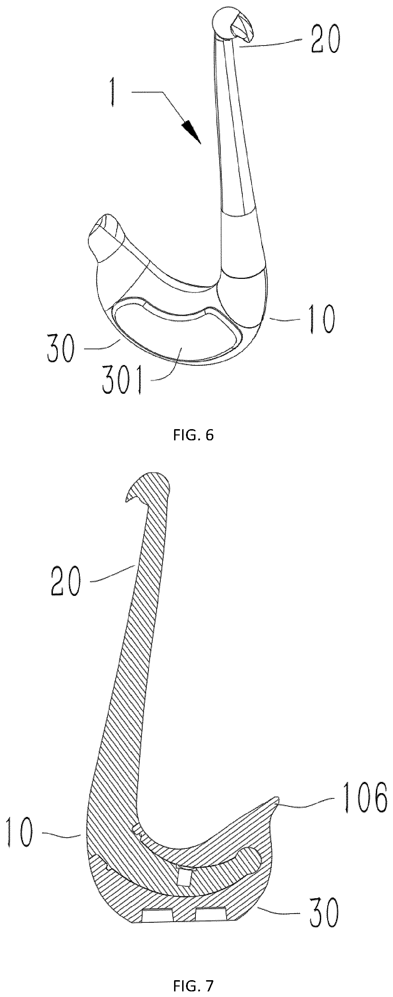

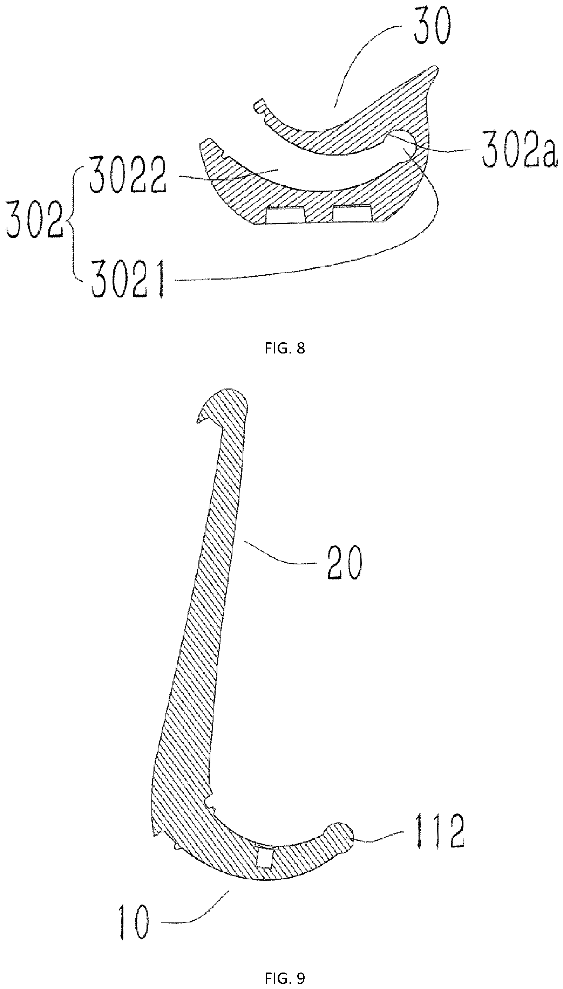

In another example the extractor 1 comprises a grip hook 10, a dismounting hook 20 and a chew gum layer 30, as shown in FIG. 6 and FIG. 7, the grip hook 10 and the dismounting hook 20 are integrally formed, and the chew gum layer 30 wraps an end of the grip hook 10 away from the dismounting hook 20. The chew gum layer 30 is arranged with a connecting groove 302 for inserting the end of the grip hook 10 away from the dismounting hook 20. The connecting groove 302 comprises the limiting section 3021 and connecting section 3022, as shown in FIG. 8, the limiting section 3021 is communicated with the connecting section 3022, and the limiting section 3021 is located at the bottom of the connecting groove 302, the connecting section 3022 is located at the notch of the connecting groove 302. The cross-sectional area of the connecting section 3022 along one end away from the limiting section 3021 is gradually increased, so that one end of the limiting section 3021 towards the connecting section 3022 forms a limiting wall surface 302a, as shown in FIG. 8, the cross-sectional area of the limiting section 3021 along one end away from the connecting section 3022 is gradually increased; a limiting portion 112 is arranged at one end of the grip hook 10 away from the dismounting hook 20, as shown in FIG. 9, the limiting portion 112 passes through the connecting section 3022 and is accommodated in the limiting section 3021, and the limiting section 3021 abuts against the limiting wall surface 302a, so that the grip hook 10 is not easily separated from the chew gum layer 30. The bottom surface of the chew gum layer 30 is a plane, which is used to facilitate the extractor 1 to be placed in a vertical direction, and the extractor 1 is not easy to fall over. The bottom surface of the chew gum layer 30 has two protruding portions 301 extending in the circumferential direction, as shown in FIG. 6, the two protruding portions 301 are oppositely arranged on the chew gum layer 30, and the protruding portion 301 is used to correct the brace. One end of the chew gum layer 30 away from the connecting groove 302 is arranged with a misbite portion 106, the shape of the misbite portion 106 is flat-shaped, and the misbite portion 106 is used for relieving the condition of malocclusion. In the embodiment of the present application, the fingers hold the grip hook 10, and the hook-shaped member 201 extends between the teeth, so that the hook-shaped member 201 hooks the brace, and the fingers apply acting force downwards or upwards, so that the brace is gradually separated from the teeth, thereby the risk of deformation or breakage during removal of the brace is reduced.

It should be noted that, preferred embodiments of the present disclosure are provided in the description of the present disclosure and the drawings thereof, however, the present disclosure may be implemented in many different forms, and is not limited to the embodiments described in the present description. These embodiments are not used as additional limitations to the summary of the present disclosure. The purpose of providing these embodiments is to make the understanding of the disclosure of the present disclosure more thorough and comprehensive.

## Claims

1. An extractor (1) comprising:
a grip hook (10);
a dismounting hook (20), which comprises a hook-shaped member (201) and an elongated member (202), one end of the elongated member (202) is connected to the grip hook (10), the other end of the elongated member (202) is connected to the hook-shaped member (201), the hook-shaped member (201) is used for hooking a brace, so as to separate the brace from teeth;
**characterized in that**
the elongated member (202) comprises a connecting section (2021) and a clamping section (2022), one end of the connecting section (2021) is connected to the hook-shaped member (201), the other end of the connecting section (2021) is connected to the clamping section (2022);
the grip hook (10) is arranged with an abutting cavity (101), a connecting cavity (102) and a clamping groove (103), the connecting cavity (102) is located between the abutting cavity (101) and the clamping groove (103), and the clamping section (2022) passes through the abutting cavity (101) and the connecting cavity (102) and then is inserted into the clamping groove (103).

2. The extractor (1) according to claim 1, wherein,
the hook-shaped member (201) comprises a pointed portion (2011) and a spherical portion (2012), the spherical portion (2012) is connected to the pointed portion (2011) and the elongated member (202) respectively, the pointed portion (2011) and the grip hook (10) are located on two sides of the elongated member (202), and the pointed portion (2011) is inclined towards the grip hook (10).

3. The extractor (1) according to claim 1, wherein,
an outer surface of the elongated member (202) is arranged with an anti-skid pattern (202b).

4. The extractor (1) according to claim 3, wherein,
a step surface (108) is arranged between the connecting cavity (102) and the clamping groove (103);
an outer surface of the clamping section (2022) is arranged with a first limiting portion (202d), and the first limiting portion (202d) is used for abutting against the step surface (108).

5. The extractor (1) according to claim 4, wherein,
the grip hook (10) is further arranged with an avoidance groove (109), and the avoidance groove (109) is communicated with the connecting cavity (102).

6. The extractor (1) according to claim 5, wherein,
a wall surface of the abutting cavity (101) is arranged with a second limiting portion (110), and the second limiting portion (110) is located at an edge of the avoidance groove (109);
the outer surface of the clamping section (2022) is arranged with an abutting portion (202e), and the abutting portion (202e) is used for abutting against the second limiting portion (110) without allowing the dismounting hook (20) to rotate.

7. The extractor (1) according to claim 3, wherein,
the grip hook (10) is arranged with a plurality of deformation portions (104), and the plurality of deformation portions (104) are arranged at intervals along a wall surface of the abutting cavity (101);
at least one third limiting portion (202f) protrudes from the outer wall surface of the clamping section (2022), an accommodating groove (107) for accommodating the limiting portion is enclosed between any two adjacent deformation portions (104) and the abutting cavity (101), the accommodating groove (107) is communicated with the abutting cavity (101), a deformation space (202c) is enclosed between the outer wall surface of the clamping section (2022) and the limiting portion, and the deformation space (202c) is used for deformation of the deformation portion (104).

8. The extractor (1) according to claim 1, wherein,
the extractor (1) further comprises a chew gum layer (30), and the chew gum layer (30) is wound around the grip hook (10), part of the chew gum layer (30) is arranged on two opposite side surfaces of the grip hook (10), and the chew gum layer (30) is used for correcting the brace.

9. The extractor (1) according to claim 1, wherein,
an end of the grip hook (10) away from the dismounting hook (20) is arranged with a misbite portion (106), and the misbite portion (106) is used for correcting the misbite of upper and lower teeth.

## Patentansprüche

1. Extraktor (1), umfassend:
einen Greifhaken (10);
einen Demontagehaken (20), der ein hakenförmiges Element (201) und ein langgestrecktes Element (202) umfasst, wobei ein Ende des langgestreckten Elements (202) mit dem Greifhaken (10) verbunden ist, wobei das andere Ende des langgestreckten Elements (202) mit dem hakenförmigen Element (201) verbunden ist, wobei das hakenförmige Element (201) verwendet wird, um eine Zahnspange einzuhaken, um die Zahnspange von den Zähnen zu trennen;
**dadurch gekennzeichnet, dass**
das langgestreckte Element (202) einen Verbindungsabschnitt (2021) und einen Klemmabschnitt (2022) umfasst, wobei ein Ende des Verbindungsabschnitts (2021) mit dem hakenförmigen Element (201) verbunden ist, wobei das andere Ende des Verbindungsabschnitts (2021) mit dem Klemmabschnitt (2022) verbunden ist;
der Greifhaken (10) mit einem Anschlaghohlraum (101), einem Verbindungshohlraum (102) und einer Klemmnut (103) versehen ist, wobei sich der Verbindungshohlraum (102) zwischen dem Anschlaghohlraum (101) und der Klemmnut (103) befindet und der Klemmabschnitt (2022) durch den Anschlaghohlraum (101) und den Verbindungshohlraum (102) verläuft und anschließend in die Klemmnut (103) eingeführt wird.

2. Extraktor (1) nach Anspruch 1, wobei
das hakenförmige Element (201) einen spitzen Teil (2011) und einen sphärischen Teil (2012) umfasst, wobei der sphärische Teil (2012) jeweils mit dem spitzen Teil (2011) und dem langgestreckten Element (202) verbunden ist, der spitze Teil (2011) und der Greifhaken (10) sich auf zwei Seiten des langgestreckten Elements (202) befinden und der spitze Teil (2011) zum Greifhaken (10) hin geneigt ist.

3. Extraktor (1) nach Anspruch 1, wobei
eine Außenfläche des langgestreckten Elements (202) mit einem Rutschschutzmuster (202b) versehen ist.

4. Extraktor (1) nach Anspruch 3, wobei
zwischen dem Verbindungshohlraum (102) und der Klemmnut (103) eine Stufenfläche (108) vorgesehen ist;
eine Außenfläche des Klemmabschnitts (2022) mit einem ersten Begrenzungsteil (202d) versehen ist und der erste Begrenzungsteil (202d) verwendet wird, um an der Stufenfläche (108) anzuschlagen.

5. Extraktor (1) nach Anspruch 4, wobei
der Greifhaken (10) ferner mit einer Ausweichnut (109) versehen ist und die Ausweichnut (109) mit dem Verbindungshohlraum (102) in Verbindung steht.

6. Extraktor (1) nach Anspruch 5, wobei
eine Wandfläche des Anschlaghohlraums (101) mit einem zweiten Begrenzungsteil (110) versehen ist und der zweite Begrenzungsteil (110) sich an einer Kante der Ausweichnut (109) befindet;
die Außenfläche des Klemmabschnitts (2022) mit einem Anschlagteil (202e) versehen ist, und der Anschlagteil (202e) verwendet wird, um an dem zweiten Begrenzungsteil (110) anzuschlagen, ohne dass sich der Demontagehaken (20) drehen kann.

7. Extraktor (1) nach Anspruch 3, wobei
der Greifhaken (10) mit einer Vielzahl von Verformungsteilen (104) versehen ist und die Vielzahl von Verformungsteilen (104) in Abständen entlang einer Wandfläche des Anschlaghohlraums (101) vorgesehen ist;
mindestens ein dritter Begrenzungsteil (202f) aus der Außenwandfläche des Klemmabschnitts (2022) vorsteht, wobei eine Aufnahmenut (107) zum Aufnehmen des Begrenzungsteils zwischen zwei beliebigen benachbarten Verformungsteilen (104) und dem Anschlaghohlraum (101) eingeschlossen ist, wobei die Aufnahmenut (107) mit dem Anschlaghohlraum (101) in Verbindung steht, ein Verformungsraum (202c) zwischen der Außenwandfläche des Klemmabschnitts (2022) und dem Begrenzungsteil eingeschlossen ist und der Verformungsraum (202c) zur Verformung des Verformungsteils (104) dient.

8. Extraktor (1) nach Anspruch 1, wobei
der Extraktor (1) ferner eine Kaugummischicht (30) umfasst, und die Kaugummischicht (30) um den Greifhaken (10) gewickelt ist, wobei ein Teil der Kaugummischicht (30) an zwei gegenüberliegenden Seitenflächen des Greifhakens (10) angeordnet ist, und die Kaugummischicht (30) zur Korrektur der Zahnspange verwendet wird.

9. Extraktor (1) nach Anspruch 1, wobei
ein vom Demontagehaken (20) abgewandtes Ende des Greifhakens (10) mit einem Fehlbissteil (106) versehen ist und der Fehlbissteil (106) zur Korrektur des Fehlbisses von Ober- und Unterzähnen verwendet wird.

## Revendications

1. Extracteur (1) comprenant :
un crochet de préhension (10) ;
un crochet de démontage (20), qui comprend un élément en forme de crochet (201) et un élément allongé (202), une extrémité de l'élément allongé (202) est reliée au crochet de préhension (10), l'autre extrémité de l'élément allongé (202) est reliée à l'élément en forme de crochet (201), l'élément en forme de crochet (201) est utilisé pour accrocher une bague, afin de séparer la bague des dents ;
**caractérisé en ce que**
l'élément allongé (202) comprend une section de liaison (2021) et une section de serrage (2022), une extrémité de la section de liaison (2021) est reliée à l'élément en forme de crochet (201), l'autre extrémité de la section de liaison (2021) est reliée à la section de serrage (2022) ;
le crochet de préhension (10) est agencé avec une cavité de butée (101), une cavité de liaison (102) et une rainure de serrage (103), la cavité de liaison (102) est située entre la cavité de butée (101) et la rainure de serrage (103), et la section de serrage (2022) passe à travers la cavité de butée (101) et la cavité de liaison (102) et est ensuite insérée dans la rainure de serrage (103).

2. Extracteur (1) selon la revendication 1, dans lequel,
l'élément en forme de crochet (201) comprend une partie pointue (2011) et une partie sphérique (2012), la partie sphérique (2012) est reliée à la partie pointue (2011) et à l'élément allongé (202) respectivement, la partie pointue (2011) et le crochet de préhension (10) sont situés de part et d'autre de l'élément allongé (202), et la partie pointue (2011) est inclinée vers le crochet de préhension (10).

3. Extracteur (1) selon la revendication 1, dans lequel,
une surface externe de l'élément allongé (202) est agencée avec un motif antidérapant (202b).

4. Extracteur (1) selon la revendication 3, dans lequel,
une surface en gradin (108) est agencée entre la cavité de liaison (102) et la rainure de serrage (103) ;
une surface externe de la section de serrage (2022) est agencée avec une première partie de limitation (202d), et la première partie de limitation (202d) est utilisée pour venir en butée contre la surface en gradin (108).

5. Extracteur (1) selon la revendication 4, dans lequel,
le crochet de préhension (10) est en outre agencé avec une rainure d'évitement (109), et la rainure d'évitement (109) communique avec la cavité de liaison (102).

6. Extracteur (1) selon la revendication 5, dans lequel,
une surface de paroi de la cavité de butée (101) est agencée avec une deuxième partie de limitation (110), et la deuxième partie de limitation (110) est située au niveau d'un bord de la rainure d'évitement (109) ;
la surface externe de la section de serrage (2022) est agencée avec une partie de butée (202e), et la partie de butée (202e) est utilisée pour venir en butée contre la seconde partie de butée (110) sans permettre au crochet de démontage (20) d'entrer en rotation.

7. Extracteur (1) selon la revendication 3, dans lequel,
le crochet de préhension (10) est agencé avec une pluralité de parties déformables (104), et la pluralité de parties déformables (104) sont agencées à intervalles le long d'une surface de paroi de la cavité de butée (101) ;
au moins une troisième partie de limitation (202f) fait saillie de la surface de paroi externe de la section de serrage (2022), une rainure de réception (107) pour recevoir la partie de limitation est enfermée entre deux parties de déformation (104) adjacentes quelconques et la cavité de butée (101), la rainure de réception (107) communique avec la cavité de butée (101), un espace de déformation (202c) est enfermé entre la surface de paroi externe de la section de serrage (2022) et la partie de limitation, et l'espace de déformation (202c) est utilisé pour la déformation de la partie de déformation (104).

8. Extracteur (1) selon la revendication 1, dans lequel,
l'extracteur (1) comprend en outre une couche de gomme à mâcher (30), et la couche de gomme à mâcher (30) est enroulée autour du crochet de préhension (10), une partie de la couche de gomme à mâcher (30) est agencée sur deux surfaces latérales opposées du crochet de fixation (10), et la couche de gomme à mâcher (30) est utilisée pour corriger la bague.

9. Extracteur (1) selon la revendication 1, dans lequel,
une extrémité du crochet de préhension (10) à l'écart du crochet de démontage (20) est agencée avec une partie de malocclusion (106), et la partie de malocclusion (106) est utilisée pour corriger la malocclusion des dents supérieures et inférieures.
